# EUROPÄISCHE PATENTANMELDUNG

(11) **EP 1 228 701 A1**
(43) Veröffentlichungstag der Anmeldung: **07.08.2002**
(21) Anmeldenummer: 02000776.1
(22) Anmeldetag: 14.01.2002
(51) Int. Cl.: A23L 1/211, A23L 1/275, C11B 1/10, C11B 9/02

(54) **Verfahren zur Gewinnung von nativen, organischen Stoffen mit Hilfe der Zentrifugalkraft**

(30) Priorität: 17.01.2001 DE 10102071
(71) Anmelder: Westfalia Separator Industry GmbH, 59302 Oelde (DE)
(72) Erfinder: Hruschka, Steffen, 59302 Oelde (DE); Kirchner, Stefan, 33334 Gütersloh (DE); Darup, Miachael, 59269 Beckum (DE)
(74) Vertreter: Specht, Peter, Dipl.-Phys.

(57) **Zusammenfassung**

Ein Verfahren zur Gewinnung von nativen, organischen Stoffen, insbesondere Ölen, Fetten, Wachsen, Farbstoffen, Vitaminen und/oder anderen lipophilen Stoffen und deren Derivaten aus nativen Stoffgemengen, vorzugsweise bei Rohstoffen, die relativ wenig Öl - insbesondere wenig Triglyceride - in der lipophilen Fraktion enthalten, umfaßt folgende Schritte:
- das Ausgangsprodukt wird zerkleinert, sofern es nicht bereits in zerkleinerter Form vorliegt,
- aus dem zerkleinerten Ausgangsprodukt werden vor oder nach einer Wasserzugabe mit Hilfe eines Extraktionsmittels die lipophilen Stoffe extrahiert,
- der Brei wird in einem Zentrifugalfeld in eine wässrige, feste Bestandteile enthaltene Phase und eine flüssige, organische Phase aufgetrennt, welche die hydrophoben Stoffe enthält.

## Beschreibung

Die Erfindung betrifft ein Verfahren zur Gewinnung von nativen, organischen Stoffen, insbesondere Ölen, Fetten, Wachsen, Farbstoffen, Vitaminen und/oder anderen lipophilen Stoffen und deren Derivaten aus nativen Stoffgemengen, vorzugsweise bei Rohstoffen, die relativ wenig Öl - insbesondere wenig Triglyceride - in der lipophilen Fraktion enthalten, bei dem ein zerkleinertes Ausgangsprodukt zu einem Brei verarbeitet wird, der in einem Zentrifugalfeld in eine wässrige, feste Bestandteile enthaltene Phase und eine flüssige, organische Phase aufgetrennt wird.

Ein Verfahren zur Gewinnung von nativen, organischen Stoffen aus nativen Stoffgemengen ist aus der WO 96/05278 bekannt. Bei dem in dieser Schrift dargestellten Verfahren, welches in der Fachwelt auch als "Friolexverfahren" bezeichnet wird, soll das Ausgangsprodukt zunächst fein zerkleinert, dann unter Zugabe von mindestens einem wasserlöslichen organischen Lösemittel und gegebenenfalls Wasser zu einem wäßrigen Brei verarbeitet und anschließend in einem Zentrifugalfeld in einem Schritt in eine wäßrige, feste Bestandteile enthaltende Phase und eine flüssige, organische Phase aufgetrennt werden.

Daneben ist es auch bekannt, lipophile Stoffe aus Pflanzenteilen und Saaten durch Pressen oder durch eine Lösemittelextraktion (Hexan, CO₂-Extraktion, Alkoholextraktion usw.) zu gewinnen.

Beim Pressen gehen das Unverseifbare wie z.B. die Terpene, die Farbstoffe, z.B. Beta-Carotine oder das Chlorophill, die Scharfstoffe, wie z.B. Capsaicin in ihrer natürlichen Verteilung und Konzentration in das Öl über.

Bei der Lösemittelextraktion eines Öles gehen diese Stoffe in die Miscella aus Öl-Lösemittel (z. B. Hexan) entweder in ihrer natürlichen Verteilung oder bis zur Sättigungskonzentration in der Miscella in diese unpolare Phase über. Nach dem Evakuieren des Extraktionslösemittels bleibt ein an Ölbegleitstoffen reiches Öl, ggf. in Form eines Harzes (Oleoresin) übrig, in der die Konzentration der öllöslichen Stoffe viel höher ist, als man sie durch das Pressen erreichen kann.

Beim FRIOLEX-Verfahren gehen alle die Stoffe, die leichter in Öl als im wässrigen Alkohol löslich sind, mit in die Ölphase. Daher ist zum Beispiel Weintraubenkernöl nach FRIOLEX wesentlich Vitamin E - und Chlorophyllreicher als Preßöl. Aufgrund der geringen Temperaturen beim FRIOLEX wird zusätzlich noch ein Abbau dieser temperaturempfindlichen Ölbegleitstoffe vermieden, wie er beispielsweise beim Hexan-Extraktionsprozeß zu beobachten ist.

Die maximale Konzentration der Ölbegleitstoffe ist beim FRIOLEX-Prozeß mit der Sättigungskonzentration dieser Stoffe in der Ölphase gegeben. Der verwendete Alkohol ist nur Emulsionsbrecher und zu circa 95 % in der wässrigen Phase zu finden. weshalb eine signifikante Anreicherung der Ölbegleitstoffe in der Ölphase über die Sättigungskonzentration hinaus nicht möglich ist. Um weitere, in dem Rohmaterial vorhandene öllösliche Stoffe zu extrahieren, muß man vor der Trennung zusätzliches Öl in die Ölphase bringen. Statt Öl können auch andere, nichtpolare Kohlenwasserstoffe (z. B. Hexan) verwendet werden. Wenn man dieses Extraktionslösemittel nach der FRIOLEX-Öltrennung evaporiert, bleibt ein an diesen Ölbegleitstoffen angereichertes Öl über (siehe hierzu auch die EP 0 943 675 A1).

Die Erfindung hat demgegenüber die Aufgabe, ein unkompliziertes und einfach realisierbares Verfahren zur Gewinnung der im Gattungsbegriff angegebenen Stoffe zu schaffen.

Die Erfindung löst diese Aufgabe durch den Gegenstand des Anspruches 1.

Eine alternative Ausführungsform der Erfindung ist im Anspruch 2 angegeben.

Vorteilhafte Ausgestaltungen der Erfindung sind den Unteransprüchen zu entnehmen.

Danach wird das Ausgangsprodukt zerkleinert, sofern es nicht bereits in zerkleinerter Form vorliegt, aus dem zerkleinerten Ausgangsprodukt werden mit Hilfe eines Extraktionsmittels die lipophilen Stoffe extrahiert, dem derart erhaltenen Zwischenprodukt wird zur Bildung eines wässrigen Breis Wasser zugesetzt, falls kein ausreichender Wassergehalt im Ausgangsmaterial enthalten ist und der Brei wird in einem Zentrifugalfeld in eine wässrige, feste Bestandteile enthaltene Phase und eine flüssige, organische Phase aufgetrennt, welche die hydrophoben Stoffe enthält.

Alternativ kann dem zerkleinerten Ausgangsprodukt zunächst zur Bildung eines wässrigen Breis Wasser zugesetzt werden, falls kein ausreichender Wassergehalt im Ausgangsmaterial enthalten ist und dann werden mit Hilfe eines Extraktionsmittels die lipophilen Stoffe extrahiert, bevor der derart erhaltene Brei in dem Zentrifugalfeld in eine wässrige, feste Bestandteile enthaltene Phase und eine flüssige, organische Phase aufgetrennt wird, welche die hydrophoben Stoffe enthält.

Die Erfindung nutzt den überraschenden Effekt, daß der Effekt der Extraktion von Ölbegleitstoffen auch dadurch erreicht werden kann, daß nur Wasser (ohne Alkohol) und vorzugsweise Öl zum Rohmaterial zugegeben werden, so daß eine Suspension entsteht, aus der das ölbegleitstoffreiche Öl zentrifugal abgetrennt werden kann. Dies geht vorzugsweise dann, wenn die Phasen Öl und Wasser keine Emulsion bilden.

Die Emulsionsbildung wird durch das Vorhandensein von Emulgatoren bestimmt. Diese sind z. B. Lecithine, aber auch native Eiweiße. Getrocknete und gemahlene, ölbegleitstoffreiche Rohmaterialien wie die Schalen, Kerne oder Blüten z. B. von Paprika oder Calendula (Ringelblume) enthalten keine hinreichend große Menge an Emulgatoren, so daß in diesem Fall auf die Zugabe des als Emulsionsbrecher wirkenden Alkohols verzichtet werden kann. Öllösliche Stoffe werden in die Ölphase übergeben, so sie durch Zerstörung der sie im Ausgangsmaterial umgebenden Hüllen (z. B. Lipo-Protein- Membranen) beispielsweise durch Zerkleinerung freigesetzt werden.

Nach der Erfindung wird also zunächst das Ausgangsprodukt - z.B. trockenes Paprikapulver, dessen Farbstoff von wirtschaftlichem Interesse ist - mit dem Extraktionsmittel extrahiert. Anschließend wird durch eine Zugabe von Wasser eine Phasengrenze zwischen schwerer Wasserphase inklusive der Feststoffpartikel auf der einen Seite und organischer, den Farbstoff tragender Phase auf der anderen Seite geschaffen. Bei der Verwendung von Pflanzenöl als Extraktionsmittel ist mit der Erfindung eine nahezu vollständige Extraktion des fettlöslichen Farbstoffes selbst in nur einer Extraktionsstufe möglich. Über die Zugabe einer hinreichenden Wassermenge im Zentrifugalfeld erfolgt eine nahezu vollständige Rückgewinnung des Extrationsmittels ohne Emulsionen.

Als zu extrahierende Produkte kommen neben den fettlöslichen Farbstoffen auch biologisch aktive hydrophobe Wirkstoffe, wie z. B. Vitamine oder andere zur Fraktion der "Unverseifbaren" gehörende Stoffe (z.B. Scharfstoffe, Terpene, Sterole) in Frage. Verständlicherweise ist die Vorgehensweise bei den jeweiligen Produkten und zu lösenden Extraktionsaufgaben unterschiedlich. Durch Routineversuche lassen sich optimale Verfahrensbedingungen ermitteln.

Vorzugsweise wird dem Zwischenprodukt Wasser zugesetzt, falls kein Wassergehalt im Ausgangsmaterial enthalten ist, der zur vollständigen Quellung und/oder Aufnahme der wasserlöslichen Stoffe ausreicht. Durch die Zugabe von Wasser wird eine Phasengrenze zwischen schwerer Wasserphase inklusive der Feststoffpartikel auf der einen Seite und organischer, den Farbstoff tragender Phase auf der anderen Seite geschaffen.

Z.B. wird dem Zwischenprodukt bis zu 30% (insbesondere 5- 10%) Wasser zugesetzt, falls es sich bei dem Ausgangsmaterial um ein frisches, ungetrocknetes Produkt handelt, um eine fließfähige Masse zu schaffen.

Dagegen wird dem Zwischenprodukt bis zu 95%, insbesondere 50 - 90% Wasser zugesetzt, falls es sich bei dem Ausgangsmaterial um ein getrocknetes Produkt handelt (z.B. wird ein Anteil getrocknetes Paprikapulver mit 9 Anteilen Wasser vermischt).

Es bietet sich an, daß das zerkleinerte Ausgangsmaterial mit dem Extraktionsmittel vermischt/malaxiert wird.

Hierbei kann es zweckmäßig sein, wenn das zerkleinerte Ausgangsmaterial erwärmt wird, insbesondere auf eine Temperatur von mehr als 30 °C und weniger als 100 °C erwärmt, vorzugsweise auf eine Temperatur zwischen 60 und 80°C.

Vorzugsweise wird der Brei im Zentrifugalfeld in einem Trennschritt in die wässrige, feste Bestandteile enthaltene Phase und die flüssige, organische Phase aufgetrennt.

Es ist zweckmäßig, wenn die Verarbeitung ohne den Zusatz eines wasserlöslichen, organischen Lösungsmittels erfolgt.

Bevorzugt werden aus der im Zentrifugalfeld gewonnenen, vorzugsweise weitgehend unpolaren Phase, "Ölphase" genannt, Ölbegleitstoffe als Harz aufkonzentriert.

Es ist auch denkbar, dass aus der im Zentrifugalfeld gewonnenen, vorzugsweise weitgehend unpolaren Phase die Ölbegleitstoffe durch eine Filtration abgetrennt werden. Zweckmäßig wird bei der Filtration ein Mikro-, Ultra oder Nanofiltrationsverfahren eingesetzt.

Es ist auch denkbar, dass aus der im Zentrifugalfeld gewonnenen, vorzugsweise weitgehend unpolaren Phase, insbesondere Ölphase, das Extraktionsmittel durch Verdampfung zurückgewonnen wird.

Es ist möglich, dass das bei der Aufkonzentration der Ölbegleitstoffe rückgewonnene Öl erneut dem Extraktionsschritt bei der Verarbeitung des Ausgangsproduktes zugeführt wird.

Vorzugsweise wird als Ausgangsprodukt ein Pulver, insbesondere ein Paprikapulver, verwendet, welches eine Partikelgröße von weniger als 750 µm aufweist. Zweckmäßig ist eine Partikelgröße zwischen 250 und 750 µm.

Nach einer Variante wird die bei der Zentrifugaltrennung gewonnene wäßrige Phase nach einer Feststoffabtrennung zur Konzentratgewinnung eingedampft, insbesondere zur Polyphenolkonzentrierung.

Als Extraktionsmittel sind leichte, unpolare Stoffe einsetzbar, insbesondere Benzine, mittel- bis langkettige Fettsäureester. Geeignet sind ferner natürliche Wachse, Jojobaöl, natürliche Fette, insbesondere Kakaobutter, Kokosfett und/oder Sheabutter.

Zweckmäßig wird die Extraktion in Abhängigkeit vom eingesetzten Extraktionsmittel bei einer Temperatur zwischen -10°C und der Zersetzungstemperatur der zu extrahierenden Stoffe durchgeführt.

Bevorzugt erfolgt die Zentrifugalfeldtrennung bei einer Temperatur zwischen 0 und 100°, insbesondere bei einer Temperatur von mehr als 60°C erfolgt.

Nach einer Variante kann auch eine Mehrfachextraktion des Ausgangsproduktes durchgeführt werden, um die Ausbeute zu erhöhen. Dabei kann die nach der Zentrifugalfeldtrennung abgetrennte wässrige Feststoffphase erneut mit Öl vermischt werden und dann können der Extraktionsschritt sowie der nachfolgende Trennschritt durchgeführt werden.

Zweckmäßig erfolgt zur Verbesserung der Extraktion der lipophilen Stoffe vor der Wasserzugabe und/oder der Zentrifugalfeldtrennung eine erneute Zerkleinerung oder eine Homogenisierung des mit dem Extraktionsmittel versetzten Ausgangsproduktes erfolgt.

Nachfolgend wird die Erfindung unter Bezug auf die Zeichnung anhand eines Ausführungsbeispiels näher beschrieben. Es zeigt:

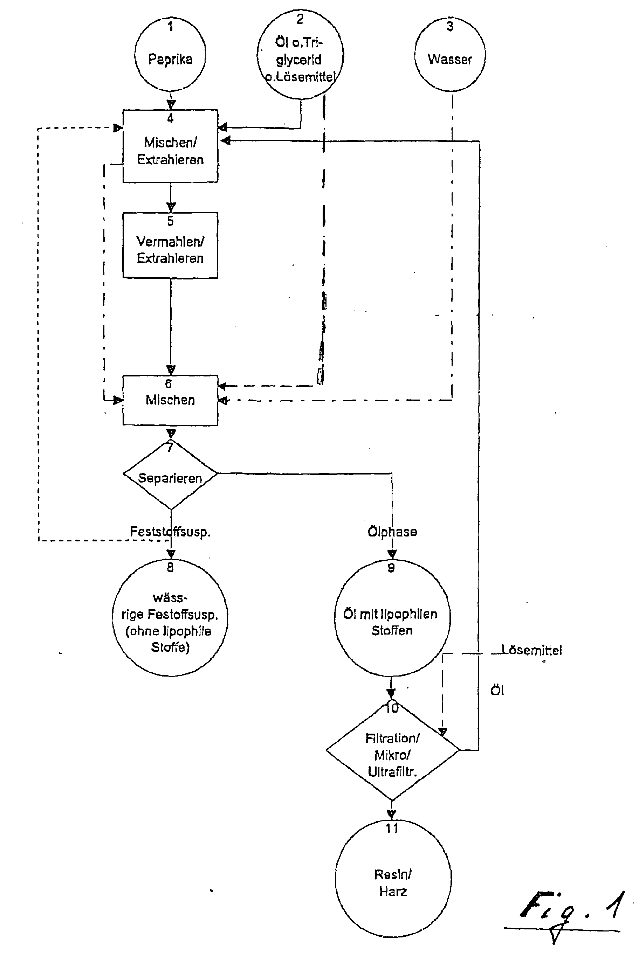

Fig. 1 ein Flußdiagramm zur Veranschaulichung des Verfahrensablaufes bei einem bevorzugten Ausführungsbeispiel der Erfindung.

Nach Fig. 1 wird Paprikapulver 1 als bereits zerkleinertes Ausgangsprodukt - vorzugsweise mit einer Partikelgröße von weniger als 750 und mehr als 250 µm - mit Pflanzenöl 2 ggf. unter Temperaturerhöhung auf mehr als 30 und weniger als 100°C; insbesondere auf einen Wert zwischen 60 und 80°C vermischt/malaxiert (Schritt 4) und ggf. noch fein vermahlen/extrahiert (Schritt 5). Dabei erfolgt die Extraktion der lipophilen Stoffe in die Ölphase.

Anschließend wird das derart erhaltene Zwischenprodukt mit Wasser 3 vermischt/extrahiert (Schritt 6) und dann vermahlen/malaxiert (Schritt 5), vorzugsweise mit kaltem bis warmen Wasser (z.B. um 60°C, oder zwischen 10 - 60°) und der derart erhaltene Brei wird in einem Zwei-Phasen-Trenndekanter in eine wässrige, feste Bestandteile enthaltene Phase (8) und eine flüssige, organische Phase (9) aufgetrennt (Schritt 7), welche die hydrophoben Stoffe enthält.

Dem Zwischenprodukt wird nur Wasser zugesetzt (Schritt 6), falls kein Wassergehalt im Ausgangsmaterial enthalten ist, der zur vollständigen Quellung und/oder Aufnahme der wasserlöslichen Stoffe ausreicht. Dies ist bei getrocknetem Paprikapulver der Fall.

Anschließend erfolgt beispielsweise eine Abtrennung der Feststoffe aus der wäßrigen Suspension und/oder ein Eindampfen der wäßrigen Phase zur Konzentratgewinnung sowie beispielsweise eine Filtration der flüssigen organischen Phase (10) zur Gewinnung eines Resines/Harzes.

Durch Filtration der flüssigen organischen Phase werden eine ölbegleitstoffreiche Phase und eine Ölphase erhalten (Rezirkulation). Das Öl kann also vom Schritt 10 (Filtration) zum Schritt 4 (Mischen) zurückgeleitet und erneut zur Extraktion verwendet werden.

Nach der Ölabtrennung vom Feststoff kann erneut Öl zugesetzt werden. (Mehrfachextraktion), d.h., die beim Schritt abgetrennte wässrige Feststoffphase wird erneut mit Öl vermischt und dem Schritt 4 zugeführt, um die Ausbeute des Verfahren - wenn erforderlich - zu erhöhen. Nach einer Variante ist es auch möglich, dem Öl/Feststoffgemisch nach dem Extrahieren zunächst kein Wasser zuzusetzen sondern das Öl/Feststoffgemisch direkt einer Trennung wie einer Filtration oder einer Zentrifugaltrennung zu unterwerfen. Das dabei gewonnene Gemisch wird dann erneut mit Öl versetzt.

Es ist auch denkbar, beim Mischen nach dem Extrahieren (Schritt 6) erneut Öl und/oder Wasser zuzusetzen.

Es ergibt sich also beispielsweise folgende Verfahrensweise:
A. Mischen von Paprikapulver (z.B. d₉₅ = 250 -750 µm, insbesondere 750 µm) mit Pflanzenöl, z. B. Sonnenblumenöl;
B. Ggf. weitere Feinstvermahlung, z.B. mit Kugelmühle;
C. Zugabe von Wasser;
D. Malaxieren;
E. Zentrifugale Trennung, beispielsweise mit 2-Phasen-Trenndekanter in Öl (mit den Ölbegleitstoffen) und in eine wässrige Phase (Suspension);
F. Abtrennung der Feststoffe aus der wässrigen Suspension (ggf. zusätzliches Wasser zusetzen);
G. Eindampfen der wässrigen Phase, Konzentratgewinnung

Alternativ:
F. Eindampfen der Feststoffe, Powdergewinnung.

Eine feinere Vermahlung erhöht die Ausbeute (geringere Verluste im Feststoffbrei). Ein Optimum findet sich derzeit bei 500 ± 250 µm.

Als mögliches Extraktionslösemittel kommt nicht nur Pflanzenöl, sondern es kommen nahezu alle leichten, unpolaren Stoffe lösenden, organischen Extraktionslösemittel, wie z. B. Benzine, wie Hexan, Oktan etc., mittel- bis langkettige Fettsäureester, insbesondere der Kettenlänge C6 bis C12, da diese leicht destillativ entfernbar sind, aber auch natürliche Wachse, wie Jojoba, und Fette, wie z. B. Kakaobutter und Sheabutter in Frage, weil diese als Farbstoff enthaltende Massen direkt weiterverarbeitet werden können. Anwendungsmöglichkeiten bestehen z. B. in der Kosmetikindustrie.

Der Temperaturbereich, in dem die Extraktion durchgeführt werden kann, liegt je nach Extraktionslösemittel vorzugsweise im Bereich von - 10° C für leicht flüchtige Benzine bis zu einer Temperatur von knapp unterhalb der Zersetzungstemperatur der zu extrahierenden Materialien und Produkte (circa 150 °C), und für die nach Zugabe von Wasser erfolgende Phasentrennoperation sollte eine Temperatur von knapp oberhalb 0°C bis zur Siedetemperatur des Wassers (100 °C) gewählt werden.

Das Verhältnis vom Extraktionsmittel zu extrahierendem Trockenprodukt liegt insbesondere im Bereich von vorzugsweise 1: 10 bis 10: 1.

Bezüglich der Wasserzugabe wird vorzugsweise ein Verhältnis von Trockensubstanz zu Wasser von 1 : 1 bis 1: 10 gewählt werden.

Denkbar ist auch eine mehrstufige Trockenextraktion durch Verwendung von Klärdekantern oder Filterpressen, wobei zu beachten ist, daß erst durch den Zusatz von Wasser als Phasengrenze ausbildendes Medium eine vollständige Rückgewinnung des Extraktionsmittels möglich ist. Das Wasser verdrängt das Öl oder das sonstige Extraktionsmittel aus der Feststoffsuspension. Überraschenderweise behindert der Wassergehalt frischer Produkte, z.B. frischen Paprikas die Extraktion nicht.

Die Aufbereitung und Reinigung der extrahierenden Produkte kann z.B. durch Waschen mit Wasser und Trocknen und eventuell destillatives Entfernen der Extraktionsmittel erfolgen.

## Patentansprüche

1. Verfahren zur Gewinnung von nativen, organischen Stoffen, insbesondere Ölen, Fetten, Wachsen, Farbstoffen, Vitaminen und/oder anderen lipophilen Stoffen und deren Derivaten aus nativen Stoffgemengen, vorzugsweise bei Rohstoffen, die relativ wenig Öl oder Fett - insbesondere wenig Triglyceride - in der lipophilen Fraktion enthalten, mit folgenden Schritten:
a) das Ausgangsprodukt wird zerkleinert, sofern es nicht bereits in zerkleinerter Form vorliegt,
b) aus dem zerkleinerten Ausgangsprodukt werden mit Hilfe eines Extraktionsmittels die lipophilen Stoffe extrahiert,
c) vorzugsweise wird dem derart erhaltenen Zwischenprodukt zur Bildung eines wässrigen Breis Wasser zugesetzt, falls kein ausreichender Wassergehalt im Ausgangsmaterial enthalten ist,
d) der Brei wird in einem Zentrifugalfeld in eine wässrige, feste Bestandteile enthaltene Phase und eine flüssige, organische Phase aufgetrennt, welche die hydrophoben Stoffe enthält.

2. Verfahren zur Gewinnung von nativen, organischen Stoffen, insbesondere Ölen, Fetten, Wachsen, Farbstoffen, Vitaminen und/oder anderen lipophilen Stoffen und deren Derivaten aus nativen Stoffgemengen, vorzugsweise bei Rohstoffen, die relativ wenig Öl oder Fett - insbesondere wenig Triglyceride - in der lipophilen Fraktion enthalten, mit folgenden Schritten:
a) das Ausgangsprodukt wird zerkleinert, sofern es nicht bereits in zerkleinerter Form vorliegt,
b) dem zerkleinerten Ausgangsprodukt wird zur Bildung eines wässrigen Breis Wasser zugesetzt,
c) aus dem zerkleinerten und mit Wasser vermischten Ausgangsprodukt werden mit Hilfe eines Extraktionsmittels die lipophilen Stoffe extrahiert,
d) der derart erhaltene Brei wird in einem Zentrifugalfeld in eine wässrige, feste Bestandteile enthaltene Phase und eine flüssige, organische Phase aufgetrennt, welche die hydrophoben Stoffe enthält.

3. Verfahren nach Anspruch 1 oder 2, **dadurch gekennzeichnet, daß** dem Zwischenprodukt Wasser zugesetzt wird, falls kein Wassergehalt im Ausgangsmaterial enthalten ist, der zur vollständigen Quellung und/oder Aufnahme der wasserlöslichen Stoffe ausreicht.

4. Verfahren nach Anspruch 3, **dadurch gekennzeichnet, daß** dem Zwischenprodukt bis zu 30%, insbesondere 5- 10% Wasser zugesetzt wird, falls es sich bei dem Ausgangsmaterial um ein frisches, ungetrocknetes Produkt handelt.

5. Verfahren nach Anspruch 3, **dadurch gekennzeichnet, daß** dem Zwischenprodukt bis zu 95%, insbesondere 50 bis 90% Wasser zugesetzt wird, falls es sich bei dem Ausgangsmaterial um ein getrocknetes Produkt handelt.

6. Verfahren nach einem der vorstehenden Ansprüche, **dadurch gekennzeichnet, daß** durch die Zugabe von Wasser eine Phasengrenze zwischen schwerer Wasserphase inklusive der Feststoffpartikel auf der einen Seite und organischer, den Farbstoff tragender Phase auf der anderen Seite geschaffen wird.

7. Verfahren nach einem der vorstehenden Stoffe, **dadurch gekennzeichnet, daß** das zerkleinerte Ausgangsmaterial mit dem Extraktionsmittel vermischt/malaxiert wird.

8. Verfahren nach einem der vorstehenden Stoffe, **dadurch gekennzeichnet, daß** das zerkleinerte Ausgangsmaterial erwärmt wird.

9. Verfahren nach einem der vorstehenden Stoffe, **dadurch gekennzeichnet, daß** das zerkleinerte Ausgangsmaterial auf eine Temperatur von mehr als 30 °C und weniger als 100 °C erwärmt wird.

10. Verfahren nach einem der vorstehenden Stoffe, **dadurch gekennzeichnet, daß** das zerkleinerte Ausgangsmaterial und/oder das Zwischenprodukt auf eine Temperatur zwischen 60 und 80°C erwärmt wird.

11. Verfahren nach einem der vorstehenden Ansprüche, **dadurch gekennzeichnet, daß** der Brei im Zentrifugalfeld in einem Schritt in die wässrige, feste Bestandteile enthaltene Phase und die flüssige, organische Phase aufgetrennt wird.

12. Verfahren nach einem der vorstehenden Ansprüche, **dadurch gekennzeichnet, daß** die Verarbeitung ohne den Zusatz eines wasserlöslichen, organischen Lösungsmittels erfolgt.

13. Verfahren nach einem der vorstehenden Ansprüche, **dadurch gekennzeichnet, daß** aus der im Zentrifugalfeld gewonnenen, vorzugsweise weitgehend unpolaren Phase, insbesondere Ölphase, Ölbegleitstoffe als Harz aufkonzentriert werden.

14. Verfahren nach einem der vorstehenden Ansprüche, **dadurch gekennzeichnet, daß** aus der im Zentrifugalfeld gewonnenen, vorzugsweise weitgehend unpolaren Phase, insbesondere Ölphase, das Extraktionsmittel durch Verdampfung zurückgewonnen wird.

15. Verfahren nach einem der vorstehenden Ansprüche, **dadurch gekennzeichnet, daß** aus der im Zentrifugalfeld gewonnenen, vorzugsweise weitgehend unpolaren Phase, insbesondere Ölphase, die Ölbegleitstoffe durch eine Filtration abgetrennt werden.

16. Verfahren nach einem der vorstehenden Ansprüche, **dadurch gekennzeichnet, daß** bei der Filtration ein Mikro-, Ultra oder Nanofiltrationsverfahren eingesetzt wird.

17. Verfahren nach einem der vorstehenden Ansprüche, **dadurch gekennzeichnet, daß** das bei der Aufkonzentration der Ölbegleitstoffe rückgewonnene Öl erneut dem Extraktionsschritt bei der Verarbeitung des Ausgangsproduktes zugeführt wird.

18. Verfahren nach einem der vorstehenden Ansprüche, **dadurch gekennzeichnet, daß** als Ausgangsprodukt ein Pulver, insbesondere ein Paprikapulver,verwendet wird, welches eine Partikelgröße von weniger als 750 µm aufweist.

19. Verfahren nach einem der vorstehenden Ansprüche, **dadurch gekennzeichnet, daß** als Ausgangsprodukt ein Pulver, insbesondere ein Paprikapulver, verwendet wird, welches eine Partikelgröße zwischen 250 µm und 750 µm aufweist.

20. Verfahren nach einem der vorstehenden Ansprüche, **dadurch gekennzeichnet, daß** die bei der Zentrifugaltrennung gewonnenen wäßrige Phase nach einer Feststoffabtrennung zur Konzentratgewinnung eingedampft wird, insbesondere zur Polyphenolkonzentrierung.

21. Verfahren nach einem der vorstehenden Ansprüche, **dadurch gekennzeichnet, daß** als Extraktionsmittel leichte, unpolare Stoffe eingesetzt werden.

22. Verfahren nach einem der vorstehenden Ansprüche, **dadurch gekennzeichnet, daß** als Extraktionsmittel Benzine verwendet werden.

23. Verfahren nach einem der vorstehenden Ansprüche, **dadurch gekennzeichnet, daß** als Extraktionsmittel mittel- bis langkettige Fettsäureester verwendet werden.

24. Verfahren nach einem der vorstehenden Ansprüche, **dadurch gekennzeichnet, daß** als Extraktionsmittel natürliche Wachse und/oder Fette, insbesondere Jojobaöl, Kakaobutter, Kokosfett und/oder Sheabutter verwendet wird/werden.

25. Verfahren nach einem der vorstehenden Ansprüche, **dadurch gekennzeichnet, daß** die Extraktion in Abhängigkeit vom eingesetzten Extraktionsmittel bei einer Temperatur zwischen -10°C und der Zersetzungstemperatur der zu extrahierenden Stoffe durchgeführt wird.

26. Verfahren nach einem der vorstehenden Ansprüche, **dadurch gekennzeichnet, daß** die Zentrifugalfeldtrennung bei einer Temperatur zwischen 0 und 100° erfolgt; vorzugsweise bei bei einer Temperatur von mehr als 60°C erfolgt.

27. Verfahren nach einem der vorstehenden Ansprüche, **dadurch gekennzeichnet, daß** eine Mehrfachextraktion des Ausgangsproduktes durchgeführt wird, vorzugsweise derart, daß die nach der Zentrifugalfeldtrennung abgetrennte wässrige Feststoffphase erneut mit Öl vermischt wird und der Extraktionsschritt sowie der nachfolgende Trennschritt durchgeführt wird.

28. Verfahren nach einem der vorstehenden Ansprüche, **dadurch gekennzeichnet**, **dadurch gekennzeichnet, daß** zur Verbesserung der Extraktion der lipophilen Stoffe vor der Wasserzugabe und/oder der Zentrifugalfeldtrennung eine erneute Zerkleinerung oder eine Homogenisierung des mit dem Extraktionsmittel versetzten Ausgangsproduktes erfolgt.
